Europäisches Patentamt

European Patent Office

Office européen des brevets

(19)

(11) **EP 0 562 941 B1**

(12) **FASCICULE DE BREVET EUROPEEN**

(45) Date de publication et mention
de la délivrance du brevet:
**13.08.1997 Bulletin 1997/33**

(51) Int Cl.⁶: **G01S 17/88**, G01S 7/48,
G02B 26/08

(21) Numéro de dépôt: **93400734.5**

(22) Date de dépôt: **22.03.1993**

(54) **Dispositif de télémétrie et son application à un système de détection d'obstacles**

Entfernungsmessgerät und dessen Anwendung in einem System zur Hinderniserkennung

Distance measuring device and its application to an obstacle detection system

(84) Etats contractants désignés:
**DE FR GB IT SE**

(30) Priorité: **27.03.1992 FR 9203716**

(43) Date de publication de la demande:
**29.09.1993 Bulletin 1993/39**

(73) Titulaire: **THOMSON-CSF**
**75008 Paris (FR)**

(72) Inventeurs:
• **Grossmann, Benoist**
**F-92402 Courbevoie Cedex (FR)**
• **Defour, Martin**
**F-92402 Courbevoie Cedex (FR)**
• **Fertala, Rémi**
**F-92402 Courbevoie Cedex (FR)**

(74) Mandataire: **Lincot, Georges et al**
**THOMSON-CSF-S.C.P.I.,**
**13, Avenue du Président**
**Salvador Allende**
**94117 Arcueil Cédex (FR)**

(56) Documents cités:
FR-A- 2 258 637          US-A- 4 068 124
US-A- 4 572 662          US-A- 4 698 498

## Description

L'invention concerne un dispositif de télémétrie et s'applique tout particulièrement à un système de détection d'obstacles, en particulier des obstacles constitués d'objets filiformes tels les câbles haute tension. Il intéresse notamment les systèmes de détection d'obstacles pour hélicoptères.

La présence de câbles ou d'objets filiformes rend le pilotage d'hélicoptère à basse altitude très vulnérable. Ceci est particulièrement vrai en période nocturne où les moyens de vision classiques du type caméra infrarouge ou intensificateur de lumière ne permettent pas la détection de telles cibles.

De nombreuses solutions ont été proposées pour résoudre le problème de la détection de tels obstacles. Parmi celles-ci, on peut citer quelques unes à titre d'exemples non limitatifs.

Dans l'article de P. Condom, "Evitement d'obstacles pour hélicoptères : une solution en ondes millimétriques", paru dans Interavia 5, 1985, pages 459-460, on a décrit un radar à ondes millimétriques.

Ce système présente l'inconvénient d'avoir une sensibilité réduite lorsque l'angle d'incidence entre le câble et la ligne de visée est important. Cette limitation est à rapprocher directement du domaine de la longueur d'onde utilisée. Pour des longueurs d'ondes millimétriques, la réflection spéculaire est prépondérante. Cela se traduit par l'absence de cônes de diffusion latéraux.

Des mesures de "surfaces équivalentes lasers" " de câbles électriques aux longueurs d'onde du domaine infrarouge ont montré que ce domaine de longueur d'onde est bien adapté à la détection de câbles. En effet, la réflexion diffuse permet d'obtenir des échos aux incidences élevées.

Un laser $CO_2$ émettant à la longueur d'onde de 10.6 $\mu$m peut être utilisé comme source active. On peut citer le projet LOTAWS. La détection de câbles est effectuée à cette longueur d'onde. Ce projet est décrit dans un rapport de l'armée américaine intitulé : "Laser obstacle terrain avoidance warning system", R&D technical report ECOM-0145.3, ECOM-72-0145.4, ECOM-0145.2, United States Army electronics command, Fort Monmouth NJ, 1972-1973. Cependant des problèmes de compacité limitent considérablement l'utilisation héliportée d'une telle source laser.

On a également proposé des dispositifs basés sur un balayage type télévision. Un premier dispositif de ce type est décrit dans l'article de M. Eibert : "Laser radar based obstacle avoidance system for helicopters", ERF91-20, pages 185-193. Ce dispositif utilise des diodes lasers émettant à 0,8 $\mu$m.

Le balayage de la ligne de visée est obtenue mécaniquement et électroniquement avec une figure de balayage de type télévision. Le balayage électronique est obtenu dans une direction par l'utilisation d'une barrette de diodes lasers qui émettent séquentiellement. D'une manière analogue, il est utilisé à la réception une barrette de détecteurs qui fonctionne en phase avec la barrette de diodes lasers. L'autre direction de balayage est obtenue mécaniquement à l'aide d'un miroir oscillant. Ce dispositif présente l'inconvénient d'utiliser des techniques de multiplexage pour mettre en phase temporellement l'émetteur et le détecteur correspondant. De plus, le balayage mécanique, c'est-à-dire le miroir oscillant, introduit des accumulations de points aux extrémités.

Un second dispositif de ce type est décrit dans une brochure commerciale de la société Northrop. Ce système est appelé "OASYS" pour "Obstacle Avoidance System" et dans l'article de B. Nordwall intitulé : "Army Seeks System to Detect Wires. So Helicopter Pilots can Fly Fast, Low" ; Aviation Week & Space Technology, 22 janvier 1990, pages 77 à 81.

Le dispositif utilise une diode laser émettant sur une longueur d'onde de 0.9 $\mu$m. Le balayage de la ligne de visée est obtenu avec un balayage holographique. Le motif décrit est également une figure de balayage de type télévision. Ce système implique l'utilisation d'un hologramme dont le diamètre est deux fois plus grand que celui de la pupille de réception. On ne récupère donc que l'équivalent de 25 % de la puissance au niveau de la pupille de réception.

Un autre dispositif connu du brevet US 4 572 662 utilise un système de détection de câble avec un laser $CO_2$ associé à une détection hétérodyne, mais ce système de détection est insuffisant car il ne donne aucun renseignement sur la position des obstacles détectés dans le paysage notamment en vision nocturne.

On peut également citer les systèmes de détection passive. Dans ce cas, le câble est détecté par l'intermédiaire du champ magnétique créé par le courant. La détection est donc possible uniquement lorsque les câbles électriques sont sous tension ce qui limite considérablement le domaine d'utilisation. Une telle méthode est décrite dans l'article de K.E. Potter et al. intitulé "Technique for overhead-wire détection", IEEE Proc., vol.128, n°7, Décembre 1981, pages 427-432.

L'invention vise à pallier les inconvénients des dispositifs de l'art connu qui viennent d'être rappelés.

Pour ce faire, le dispositif de l'invention utilise une diode laser impulsionnelle, par exemple une diode émettant dans l'infrarouge à 0.9 $\mu$m, en association avec un système de balayage à diasporamètre. Le signal rétrodiffusé par le câble ou de façon plus générale par les obstacles est ensuite détecté. On met en oeuvre une télémétrie. Celle-ci est donnée par le temps de trajet aller-retour de l'impulsion laser. Afin de ne garder que les échos correspondant aux câbles à détecter, on a recours à un procédé d'extraction d'objets aériens. On utilise ensuite des procédés de reconnaissance de formes pour extraire les obstacles désirés par exemple les câbles. Les échos sont ensuite "incrustés" sur les images d'une caméra de type CCD ou sur tous moyens de visualisation approprié.

La figure de balayage obtenue avec un diasporamètre est particulièrement adaptée à la détection d'obstacles car le taux de remplissage est plus important au centre du champ. La mise en oeuvre d'un tel balayage est d'autre part très simple et reste compatible avec des pupilles de grandes dimensions. Cette configuration convient donc particulièrement aux systèmes fonctionnant avec des sources lasers de faible puissance ou nécessitant une grande portée.

L'encombrement minime des diaspora mètres permet d'optimiser la pupille de réception car la dimension des prismes est sensiblement égale à la dimension de la pupille de réception.

L'invention a donc pour objet un dispositif de télémétrie selon la revendication 1.

L'invention sera mieux comprise et d'autres caractéristiques et avantages apparaîtront à la lecture de la description qui suit en regard des figures annexées et parmi lesquelles :

- la figure 1 illustre schématiquement un dispositif selon l'invention ;
- les figures 2 et 3 illustrent le fonctionnement d'un diasporamètre ;
- la figure 4 est un exemple de "figure de balayage" utilisée dans le cadre de l'invention ;
- la figure 5 illustre la variation de séparation angulaire, en unités arbitraires, entre deux points consécutifs en fonction de l'angle de déviation du prisme équivalent à un diasporamètre ;
- la figure 6 illustre le processus de détection d'un obstacle ;
- la figure 7 illustre un point particulier du procédé mis en oeuvre dans l'invention tenant compte des caractéristiques réelles d'un faisceau laser, notamment de sa divergence ;
- la figure 8 est un chronogramme illustrant le processus d'extraction des échos correspondant à un obstacle ;
- les figures 9 et 10 illustrent de façon plus complète la détection d'un objet filiforme et le processus d'extraction des paramètres principaux le caractérisant.

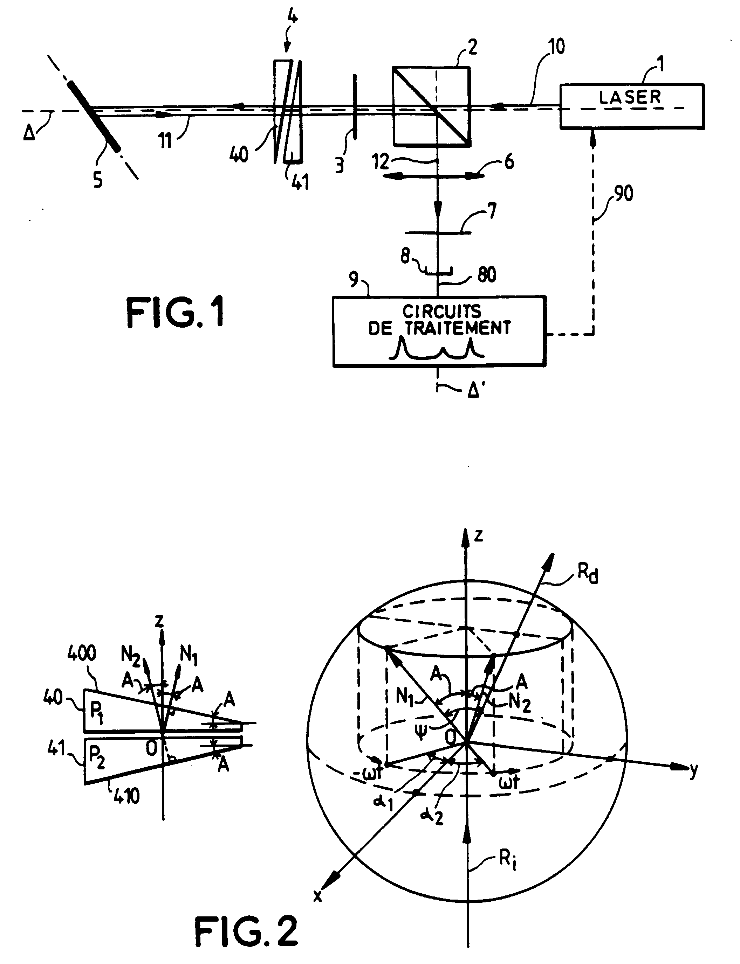

La figure 1 illustre schématiquement un dispositif de détection selon l'invention, selon un mode de réalisation préférée.

Dans ce qui suit, pour fixer les idées et sans que cela soit limitatif de la portée de l'invention, il sera considéré que l'obstacle à détecter est un câble du type câble de transport d'énergie électrique à haute tension et que le dispositif est destiné à un hélicoptère.

Comme il a été indiqué, la source 1 utilisée est une diode laser à impulsions. La puissance impulsionnelle est typiquement de l'ordre de 100 W. La longueur d'onde d'émission est égale à 0.9 μm, c'est-à-dire dans l'infrarouge. L'impulsion lumineuse 10 émise suivant un axe de visée Δ traverse un diasporamètre 4 dont le rôle va être décrit avec plus de précision ultérieurement.

Si le rayon 10 ainsi émis est intercepté par un câble 5 (et de manière générale par un obstacle) il est réfléchi ou rétrodiffusé (rayon 11 ), en tout ou partie sous forme d'écho vers le dispositif de détection.

Dans la variante de réalisation préférée représentée sur la figure 1, afin de n'avoir qu'un seul dispositif de balayage, on utilise une optique d'émission/réception commune avec séparation sur la polarisation de la lumière. La séparation est obtenue par exemple par utilisation d'un cube séparateur de polarisation 2 et d'une lame quart d'onde 3. Le diasporamètre 4 est donc utilisé à l'émission et à la réception. En émission, le rayon 10 émis par la source 1 est polarisé linéairement (par exemple verticale) et transmis par le cube de séparation de polarisation 2. Il traverse la lame quart d'onde 3 qui le transforme en polarisation circulaire (par exemple droite). Après réflexion ou rétrodiffusion le rayon capté 11 a une polarisation inverse (dans l'exemple circulaire gauche). En réception, le rayon capté 11 traverse la lame quart d'onde 3 rendant la polarisation linéaire (dans l'exemple horizontale). Il est réfléchi par le cube séparateur de polarisation 2 suivant un axe Δ' orthogonal à l'axe Δ. Le rayon 12 ainsi réfléchi est focalisé par une lentille 6, traverse un filtre interférentiel 7 destiné à ne transmettre qu'une bande de longueur d'onde centrée autour de la longueur d'onde d'émission de la source laser 1. Il est ensuite détecté par une photodiode à avalanche 8 ou tout autre moyen de détection approprié. La photodiode 8 convertit l'énergie lumineuse en un signal électrique 80 exploitable par des moyens de traitement de signaux 9. Ceux-ci comprennent des moyens de conversion analogique-numérique du signal électrique 80 délivré par la photodiode 8.

Ces moyens de traitement, comprennent des circuits de commande (non illustrés) générant un signal de commande 90 de l'émission laser.

Le balayage de la ligne de visée matérialisée par l'axe Δ est obtenu grâce au diasporamètre 4, constitué de deux prismes 40 et 41 tournant en contre rotation l'un par rapport à l'autre dans un rapport de démultiplication typiquement de dix. Les deux prismes 40 et 41 décrivent donc des mouvements de rotation uniforme ce qui supprime la nécessité de recourir à une synchronisation ou une harmonisation. La cadence de rafraîchissement de l'image est déterminée par la vitesse de rotation du prisme le plus lent. On peut donc atteindre des cadences images de l'ordre de quelques hertz.

La figure 2 illustre le fonctionnement d'un diasporamètre. Un élément optique de ce type est décrit, à titre d'exemple, dans le livre de G.Broussaud : "Optoélectronique" ; Masson et Cie, Editeurs, 1974, pages 174-175. On va en rappeler brièvement les caractéristiques. Cet élément optique rentre dans la catégorie des déflecteurs optiques mécaniques. Il utilise deux prismes $P_1$ et $P_2$, identiques disposés dos à dos et qui peuvent tourner autour d'un même axe Z (axe Δ sur la figure 1).

Les prismes $P_1$ et $P_2$ correspondent aux prismes 40 et 41 de la figure 1. On référence le diasporamètre par rapport à un trièdre orthonormé d'axes OZ, OX et OY.

On adopte les conventions suivantes :

- $\overrightarrow{N_1}$ et $\overrightarrow{N_2}$ sont les normales (vecteurs unitaires) aux faces extérieures 400 et 410 des prismes $P_1$ et $P_2$.
- OZ est l'axe de rotation (axe $\Delta$ sur la figure 1)
- $\alpha_1$ et $\alpha_2$ sont les positions angulaires des prismes par rapport à l'axe OX
- - A est l'angle commun au sommet.

Les coordonnées des vecteurs $N_1$ et $N_2$ par rapport aux axes du trièdre de référence obéissent aux relations suivantes :

$$\overrightarrow{N}_1 \begin{vmatrix} \sin A \cos \alpha_1 \\ \sin A \sin \alpha_1 \\ \cos A \end{vmatrix} \qquad (1)$$

$$\overrightarrow{N}_2 \begin{vmatrix} \sin A \cos \alpha_2 \\ \sin A \sin \alpha_2 \\ \cos A \end{vmatrix} \qquad (2)$$

L'angle $\Psi$ qui sépare $\overrightarrow{N_1}$ et $\overrightarrow{N_2}$ est aussi l'angle au sommet du prisme équivalent. Il est donné par la relation :

$$\cos \Psi = \sin^2 A \cos (\alpha 2 - \alpha 1) + \cos^2 A$$

Plusieurs modes de fonctionnement sont possibles. Le mode le plus intéressant dans le cadre de la variante préférée de réalisation du dispositif selon l'invention est celui pour lequel les prismes sont animés de vitesses angulaires dont l'une est un multiple entier de l'autre et leurs directions opposées : contre rotation.

Si on appelle $\omega$ la pulsation, on a par exemple :

$$\alpha_1 = -\omega t \qquad (4)$$

$$\alpha_2 = \rho \omega t \qquad (5)$$

On peut en déduire la déviation $\delta$ du rayon défléchi $R_d$ par rapport à la direction du rayon incident $R_i$ supposé parallèle à l'axe OZ (axe $\Delta$ d'émission de la source laser 1). La déviation est donnée par la relation :

$$\delta = 2A(n-1) \sin\left(\frac{P+1}{2} \omega t\right). \qquad (6)$$

Le plan du rayon défléchi est défini par le rayon incident $R_i$ et la normale à l'arête du prisme qui n'est autre que la bissectrice extérieure de l'angle formé par les vecteurs $\overrightarrow{N_1}$ et $\overrightarrow{N_2}$. Cette bissectrice est située dans le plan XOY et elle fait avec OX un angle $\theta$ donné par la relation :

$$\theta = \frac{\alpha_1 + \alpha_2}{2} + \frac{\pi}{2} = \frac{P-1}{2} \omega t + \frac{\pi}{2} \qquad (7)$$

Dans le plan XOY, perpendiculaire à l'axe Z (c'est-à-dire à l'axe $\Delta$), les relations (6) et (7) définissent un balayage épicycloïdal.

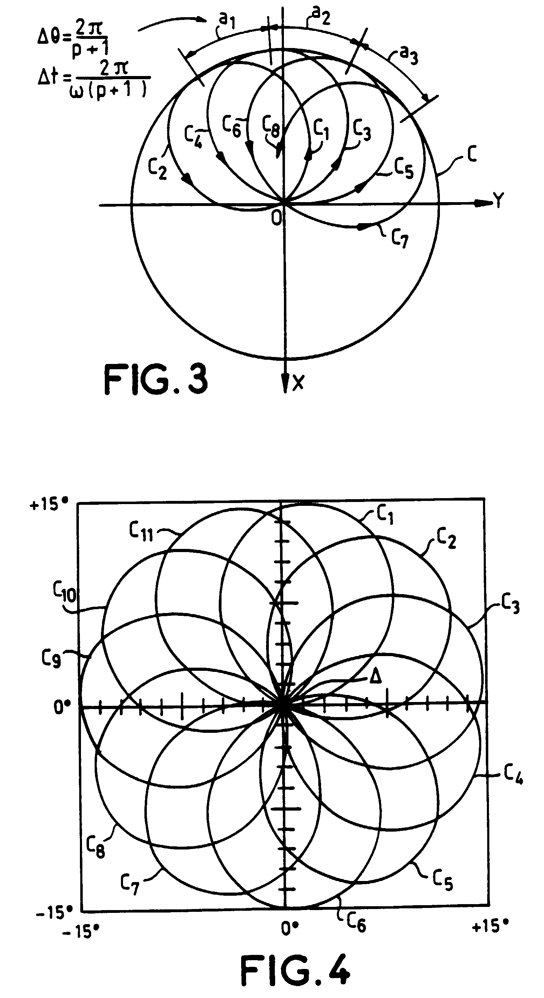

La figure 3 illustre l'allure de la courbe matérialisant le balayage.

La courbe est inscrite dans un cercle C. Elle est tangente à ce cercle C en des points équidistants : les arcs de cercle $a_1$, $a_2$, $a_3$, etc ...correspondent à des angles :

$$\Delta \theta = \frac{2 \pi}{p + 1} \qquad (8)$$

et correspondent également à des temps de passage séparés par des intervalles de temps $\Delta t$ égaux :

$$\Delta t = \frac{2 \pi}{\omega (p + 1)} \qquad (9)$$

Tous les segments de la courbe de balayage dont huit ont été représentés à titre d'illustration, $C_1$ à $C_8$, passent par l'axe OZ, c'est-à-dire l'axe $\Delta$ d'émission.

La figure 4 illustre la figure de balayage obtenue avec deux prismes tournants en contrerotation avec un rapport de démultiplication égal à dix, comme il a été indiqué. Le champ de vue ne dépend que de l'angle au sommet des prismes utilisés sur la figure 3, l'angle de vue est de $\pm 15°$ par rapport à l'axe de visée matérialisé par l'axe $\Delta$.

La figure de balayage obtenue présente l'avantage d'avoir des points équidistants à $\pm 10\%$. On peut donc faire tourner les deux prismes à vitesse angulaire constante tout en assurant des points équidistants. Il n'y a donc pas d'accumulation de points aux extrémités. Un balayage à diasporamètre convient particulièrement aux pupilles de grandes dimensions, les prismes effectuant des mouvements de rotation uniforme.

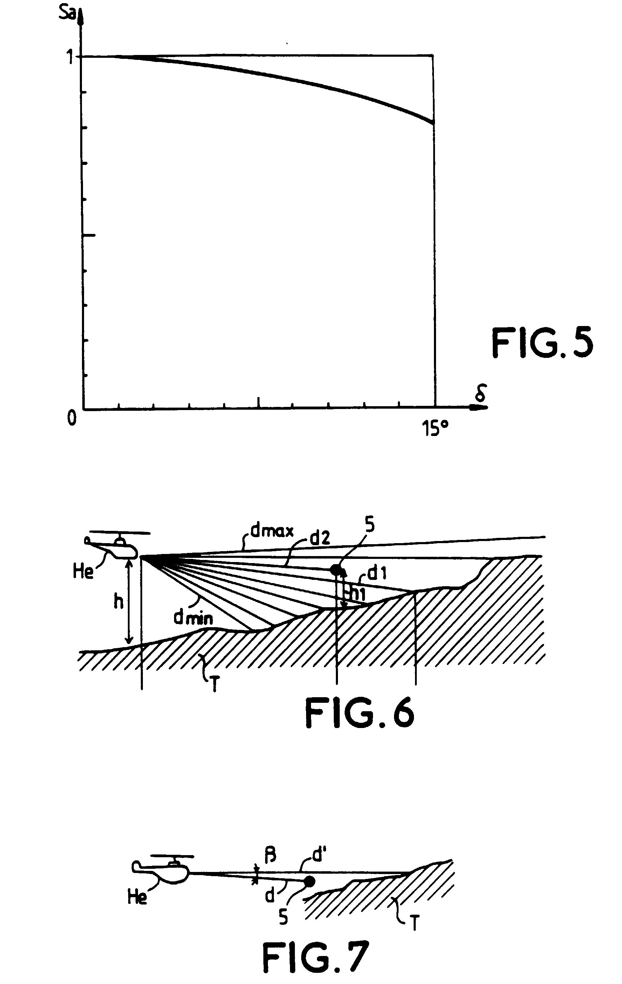

La figure 5 illustre la variation de la séparation angulaire $S_a$ (en ordonnée) en unités arbitraires entre deux points consécutifs en fonction de l'angle de déviation $\delta$ (en abscisse) du prisme équivalent au diasporamètre. Le rapport de démultiplication des vitesses est comme précédemment choisi égal à dix. On constate que la variation de la séparation ou vitesse angulaire reste inférieure à $\pm 10\%$.

Le rapport de démultiplication peut être naturellement augmenté. Dans ce cas, le nombre de rosaces et donc le taux de remplissage de l'image est augmenté.

Dans l'exemple illustré, le nombre de rosaces est égal à onze (figure 4 : $C_1$ à $C_{11}$).

Si on se reporte de nouveau à la figure 1, on a indiqué que les signaux optiques, captés par le dispositif de l'invention, sont convertis en signaux électriques 80 par une photodiode 8 et transmis à des circuits de traitement 9.

Le fonctionnement de ces circuits va maintenant être explicité.

De façon habituelle, les objectifs que l'on peut fixer à un dispositif de détection tel que celui de l'invention sont, d'une part, de prévoir à l'avance la présence d'un obstacle et, d'autre part, de le caractériser.

Le premier objectif se comprend aisément puisqu'il s'agit d'un véhicule en mouvement se dirigeant vers un obstacle qui doit être évité.

Pour atteindre cet objectif, la mesure effectuée par le dispositif de détection est une mesure de télémétrie. On mesure à tout moment la distance séparant le véhicule du relief survolé, d'une part, et des obstacles éventuels, d'autre part.

La figure 6 illustre ce processus.

On a représenté un hélicoptère $H_e$ survolant un relief T, de forme plus ou moins régulière. De par l'effet du balayage précité, la distance mesurée varie constamment mais, a priori, en l'absence d'obstacles, de façon continue. Sur la figure 6, la distance mesurée en l'absence d'obstacle varie entre $d_{min}$ et $d_{max}$. Les méthodes habituelles de télémétrie peuvent être mises en oeuvre. On a indiqué que la source laser fonctionne en mode impulsionnel. Il suffit donc de mesurer le temps nécessaire à un aller et retour, après réflexion ou rétrodiffusion. Connaissant la vitesse de la lumière, la distance peut être calculée sans difficulté.

Par contre, en présence d'un obstacle, par exemple un câble 5, il y a lors du balayage détection d'une brusque variation de la distance mesurée par télémétrie.

Cependant le faisceau émis n'est pas infiniment fin mais présente un angle de divergence fini.

On a représenté schématiquement ce phénomène sur la figure 7.

A tout instant du balayage, le pinceau émis présente un angle de divergence $\beta$. On obtient un certain nombre d'échos correspondant à des distances mesurées. Lorsque le pinceau illumine le câble 5, et si l'angle de divergence $\beta$ est supérieur à l'angle de vue du câble 5, on obtient un certain nombre d'échos correspondant au câble 5 à la distance d et au relief du terrain T à la distance d'. Pour éviter les incertitudes qui en résultent, on ne conserve que le premier écho reçu, c'est-à-dire celui correspondant à la distance mesurée d dans l'exemple illustré.

En outre, pour éviter les fausses alertes, on applique un seuil. On convient qu'il y a présence d'obstacle que si la relation suivante est vérifiée :

$$|d_2 - d_1| > \text{Seuil} \qquad (10)$$

On parle alors d'écho dit "aérien". En effet les mesures successives $d_{min}$ à $d_{max}$, correspondent à des distances séparant l'hélicoptère $H_e$ du sol. On peut les ramener d'ailleurs à des altitudes relatives, connaissant l'altitude h de l'hélicoptère par tout moyen approprié. On verra dans ce qui suit que le dispositif de l'invention peut également être utilisé à cet effet.

Par contre, la détection d'une variation brusque de la télémétrie correspond a priori à la détection d'un obstacle aérien.

C'est le cas du câble 5 représenté sur la figure 6. Celui-ci est non seulement plus proche de l'hélicoptère que le relief T mais aussi situé à une altitude $h_1$, par rapport à la verticale locale.

Pour l'application envisagée, dans la variante préférée de l'invention, une discrimination supplémentaire doit être effectuée. En effet, on désire mettre en évidence certains types d'obstacles que l'on ne peut détecter par des moyens conventionnels : caméras, etc... Il s'agit en particulier d'objets filiformes tels des câbles haute tension. Ces objets sont caractérisés notamment par un faible diamètre.

Une brusque variation de la télémétrie peut correspondre à des brusques variations du relief, par exemple la présence d'une tour, d'un pont ou tout autre bâtiment.

On est donc amené à appliquer un critère supplémentaire concernant la dimension de l'objet détecté afin de ne pas conserver les échos caractérisant des obstacles importants.

La détection proprement dite d'un obstacle par les circuits de traitement 9 (figure 1) peut s'effectuer simplement.

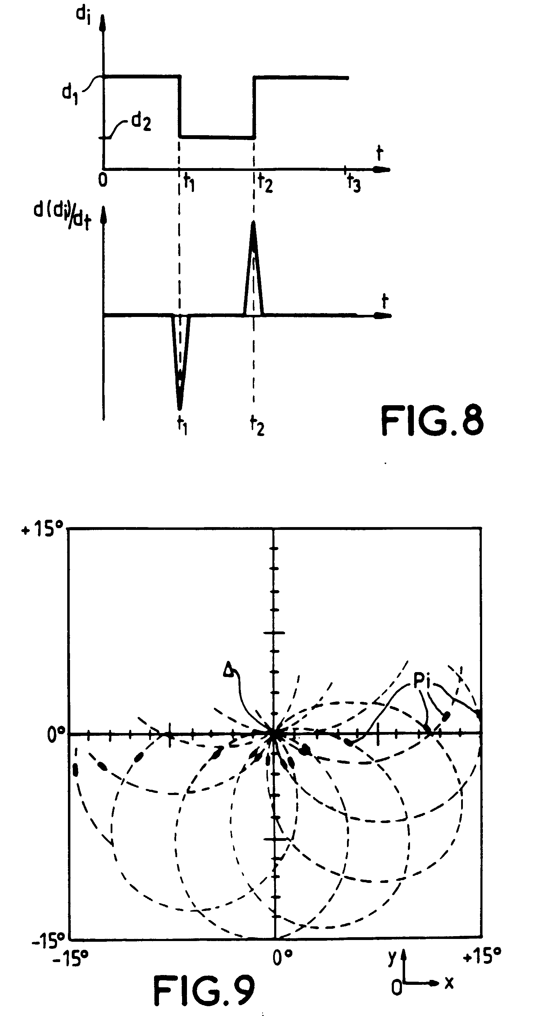

La figure 8 est un chronogramme illustrant le processus de détection. Les circuits 9 (figure 1) reçoivent à tout moment des signaux électriques convertis par la photodiode 8 à partir des signaux optiques captés.

Ces circuits 9 comprennent des organes de commande d'émission de la source laser 1, schématisés sur la figure 1 par une liaison de commande 90. De façon classique le temps s'écoulant entre l'émission et la réception est mesuré ; et la valeur télémétrique calculée, c'est-à-dire la distance $d_i$ séparant le dispositif de l'invention du relief ou de l'obstacle éventuel.

Sur la partie supérieure de la figure 8, on a représenté la variation de la télémétrie $d_i$ en fonction du temps t. L'intervalle de temps $0\text{-}t_3$ ne représente qu'une portion de la figure de balayage illustrée sur le diagramme de la figure 4. On a supposé que pendant cet intervalle de temps, la télémétrie correspondant au relief T variait peu : la distance mesurée est sensiblement égale à $d_1$.

Par contre, entre les instants $t_1$ et $t_2$, la distance mesurée décroît brutalement à la valeur $d_2$. L'intervalle de temps $t_1\text{-}t_2$ est en relation biunivoque avec l'épaisseur du câble et de façon plus générale l'épaisseur de l'obstacle. En effet la vitesse de balayage est sensiblement constante, à la précision du diasporamètre près.

Dans une variante préférée, on calcule la valeur différentielle des télémétries mesurées. La courbe obtenue est représentée sur le chronogramme de la partie basse de la figure 8. Ce chronogramme représente la variation du signal[d(d$_i$)/dt] . Ces signaux peuvent être utilisés, par exemple, par un compteur actionné par un signal d'horloge. L'amplitude du comptage entre les instants t$_1$ et t$_2$ est alors proportionnel à l'épaisseur de l'obstacle. Elle est directement utilisable par des moyens numériques. On peut comparer la valeur obtenue à une valeur de consigne connaissant a priori la valeur maximale du diamètre d'un câble ou, dans une autre variante, si l'on se fixe la valeur maximale des dimensions des objets que l'on désire détecter.

La figure 9 représente partiellement une "figure de balayage", obtenue dans les mêmes conditions que la "figure de balayage" représentée sur la figure 4 illustrant le processus d'extraction d'un objet filiforme. Les portions de courbes ont été représentées en pointillés et indiquent des résultats de télémétrie. Conformément à ce qui vient d'être décrit, on n'extrait que les signaux pour lesquels le critère d'objet aérien et d'épaisseur des objets détectés est satisfait. Les détections successives lors du balayage ressortent sous forme de segments de courbe, en traits pleins P$_i$ sur le diagramme de la figure 9.

Les échos aériens ainsi détectés peuvent ensuite être incrustés sur une caméra, par exemple de type CCD ("Charge Coupled Device") ou sur tous moyens de visualisation : lunettes de vision de nuit, "FLIR" ("Foreward Light Infrared Receiver") ou écran cathodique.

On peut, pour certains types de moyens de visualisation afficher directement ou en incrustation, la "figure de balayage" représentée sur la figure 9.

Pour des raisons de simplification, on n'a extrait que les segments de courbe supposés représenter une détection de câble ou de façon plus générale d'objet filiforme. On peut cependant, dans un exemple de réalisation non illustré, recourir à un affichage en "fausses couleurs" qui permettrait d'associer à une couleur une distance mesurée ou plus exactement une gamme de distances. Dans ce cas, les courbes seront affichées en entier et présenteront des segments de différentes couleurs.

Les segments P$_i$ (figure 9) seront associés à deux paramètres : leurs longueurs propres qui permettent de les identifier comme des obstacles du type recherché et une ou des couleurs qui indiquent la distance séparant les différents points de l'objet détecté du dispositif de l'invention.

Dans ce cas, les autres segments correspondront normalement aux distances séparant les différents points du relief du dispositif de l'invention.

Le dispositif d'affichage de la figure 9 comporte deux axes orthogonaux gradués, parallèles respectivement aux axes OY et OX d'un référentiel à deux dimensions, dans lequel l'axe OX représente l'horizontale.

Il se peut cependant, que d'un point de vue ergonomique, ce procédé d'affichage ne soit pas jugé satisfaisant. Dans la majorité des cas, il ne sera nécessaire que d'afficher les segments correspondant aux détections des objets de type filiforme (segments P$_i$).

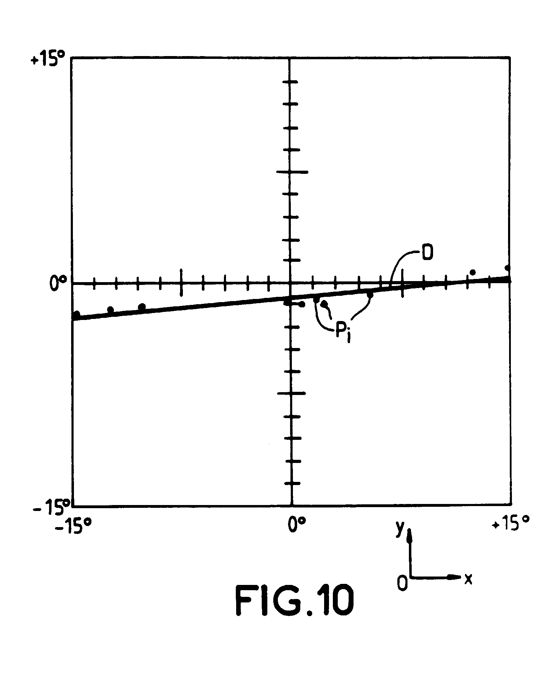

On peut alors améliorer le procédé en mettant en oeuvre une méthode connue de reconnaissance de forme : méthode des moindres carrés par exemple. Si l'on se reporte à nouveau à la figure 9, on constate aisément, qu'à la précision des mesures près, les segments P$_i$ sont alignés. Une méthode, telle que celles précitées, permet d'afficher une droite D sur l'écran, comme illustré par la figure 10.

La nature exacte de la courbe D dépend naturellement de la configuration réelle de l'obstacle. En d'autres termes, il ne s'agit pas forcément d'une droite. En outre, plusieurs obstacles peuvent exister simultanément, à des distances identiques ou différentes. Pour illustrer le premier cas, on peut citer une ligne à haute tension comportant plusieurs câbles.

Le nombre de points (ou segments de courbes) affichés dépend naturellement du taux de "remplissage" de la figure de balayage. On ne peut cependant augmenter celui-ci indéfiniment car le temps de balayage augmente également et donc la fréquence de "rafraîchissement" de l'image décroît en conséquence, pour des vitesses de rotation relatives des prismes du diasporamètre données. On est donc amené à accepter des compromis qui dépendent de l'application envisagée.

La droite D, dans l'exemple illustré, est donc en dernier ressort une représentation approchée de l'obstacle à détecter. Cette droite à son tour peut être incrustée dans une image en provenance d'une caméra classique qui ne peut détecter les obstacles du type filiforme mais fournit une image complète du sol survolé.

On peut également attribuer à des portions de la droite D des couleurs fonction des distances mesurées et associées aux différents points P$_i$ ; ce qui donne une idée des distances relatives séparant le dispositif de l'invention des différents points de l'objet détecté.

On peut également incruster sur l'écran des valeurs numériques aux emplacements des points P$_i$ et réaliser un affichage monochrome.

Ce ne sont là que des variantes de réalisations parmi celles possibles dans le domaine de l'affichage.

Le dispositif de l'invention dont certaines variantes de réalisation viennent d'être décrites peut être utilisé pour effectuer une altimétrie par rapport au sol. Dans ce cas, le dispositif doit être intégré dans une plate-forme gyrostabilisée afin de s'affranchir des mouvements du porteur. Il peut également être utilisé comme alerte d'obstacles sur la trajectoire (analogue au dispositif connu sous la dénomination "GPWS" ou "Ground Proximity Warning System") ou d'une manière générale pour effectuer un suivi de terrain.

Le dispositif décrit précédemment ou une version simplifiée, peut également être utilisé pour des applications de grande diffusion, en particulier dans le domaine automobile. Il peut alors remplacer des dispositifs à base de LIDAR, seul le procédé mis en oeuvre pour la détection des obstacles va différer.

Le procédé de détection d'obstacles doit tout d'abord tenir compte des situations différentes en virage ou en ligne droite. En particulier, l'alerte ne doit pas être donnée si un obstacle est détecté et que celui-ci n'est pas sur la route.

Le procédé de détection d'obstacle doit par exemple prendre en compte le vecteur vitesse du mobile dans son environnement et le rayon de braquage des roues. Ces informations sont transmises aux circuits 9 (figure 1) par des moyens connus : capteurs, calculateurs, etc...

L'information "obstacle devant" se traduira dans la majorité des cas par un signal simple : voyant tableau de bord, signal sonore, affichage d'un message ou une combinaison de ces actions.

Dans une version plus élaborée, l'image de l'obstacle, en couleur codée selon la distance ou le temps avant impact et déterminée par un calculateur de bord peut être projetée sur le pare-brise en utilisant les techniques aéronautiques dites visualisation "tête haute" ou " "H.U.D" selon la terminologie anglo-saxonne ("Head-up Device").

Le dispositif de l'invention n'est naturellement pas limité aux variantes de réalisation précisément décrites.

On peut à titre d'exemple utiliser des diodes de type Gallium-Arsenic/Gallium-Aluminium-Arsenic, de type Nd : YAG, micro Nd : YAG ou des diodes émettant sur la longueur d'onde 1,5 µm. Ces diodes doivent, de préférence, être utilisées en mode impulsionnel car c'est ce mode qui permet la télémétrie la plus simple à mettre en oeuvre. Il suffit de mesurer le temps d'un aller et retour de l'impulsion émise, comme il a été indiqué. D'autres procédés plus complexes existent cependant.

On a également indiqué que le diasporamètre était utilisé en émission et en réception. Cette disposition permet une réalisation à la fois compacte et simple. On peut cependant utiliser deux diasporamètres mais il est nécessaire, dans cette variante de réalisation, que les deux diasporamètres soient en phase ce qui rend cette solution plus complexe.

## Revendications

1. Dispositif de télémétrie comprenant des moyens d'émission (1) d'un pinceau (10) d'énergie lumineuse suivant un axe de visée (Δ) pour la mesure de distances séparant ces moyens d'émission d'une cible (T,5) renvoyant en écho au moins une partie de l'énergie reçue vers les moyens d'émission, des moyens de réception (6-8) de l'énergie ainsi renvoyée et des moyens (9) de détermination desdites distances ; comprenant un diaspora mètre (4) muni de deux prismes (40-41) animés de vitesses de rotation opposées en directions autour dudit axe (Δ) et imprimant au pinceau (10) une déflexion variable dans le temps de manière à ce qu'il décrive une figure de balayage déterminée dans un plan perpendiculaire audit axe (Δ), le pinceau émis balayant la cible (T,5) selon la configuration de la figure de balayage, caractérisé en ce qu'il comprend des moyens pour déterminer les dimensions et la forme de la cible (5) détectée, une caméra pour déterminer une image de l'environnement balayé par le pinceau d'énergie lumineuse, et des moyens de visualisation de l'image de l'environnement fourni par la caméra pour faire apparaître dans cette image les cibles détectées ayant une forme prédéterminée.

2. Dispositif selon la revendication 1; caractérisé en ce que le premier desdits prismes (40) est animé d'une première vitesse de rotation et le second prisme (41) est animé d'une seconde vitesse de rotation multiple entier de la première et en ce que ladite figure de balayage est épicycloïdale.

3. Dispositif selon l'une quelconque des revendications 1 à 2 ; caractérisé en ce que le diasporamétre est commun auxdits moyens d'émission (1) et de réception (6-8) et en ce qu'il comprend des moyens de séparation (2,3) de l'énergie émise et de l'énergie reçue.

4. Dispositif selon la revendication 3 ; caractérisé en ce que les moyens de réception comprennent une photodiode (8) convertissant l'énergie lumineuse en signal électrique ; et en ce que les moyens de séparation comprennent une lame quart d'onde (3) et un cube (2) séparateur de polarisation disposés entre, d'une part, les moyens d'émission (1) et le diasporamètre (4) et, d'autre part, entre le diasporamètre (4) et les moyens de réception (6-8).

5. Dispositif selon la revendication 1 ; caractérisé en ce que la source laser (1) émet un spectre de longueurs d'onde centré sur la longueur d'onde 0,9 µm.

6. Dispositif selon l'une quelconque des revendications 3 à 4 ; caractérisé en ce que les moyens de détermination de distance (9) sélectionnent, pour la détermination des distances, le premier écho reçu correspondant à l'émission de chacune desdites impulsions.

7. Dispositif de télémétrie selon l'une quelconque des revendications 1 à 6, caractérisé ce qu'il comprend en outre des moyens d'extraction (9) des échos correspondant à des obstacles (5) de type déterminé.

8. Dispositif selon la revendication 7 ; caractérisé en ce que lesdits moyens d'extraction (9) détectent des variations brusques de distances supérieures à un seuil déterminé lors dudit balayage.

9. Dispositif selon la revendication 7 ; caractérisé en ce que, chaque obstacle à détecter étant du type filiforme, lesdits moyens d'extraction (9) déterminent en outre les dimensions de l'obstacle (5) selon au moins un axe de mesure et extraient les échos correspondant auxdites dimensions inférieures à un seuil déterminé.

10. Dispositif selon la revendication 9 ; caractérisé en ce que les objets filiformes (5) étant des câbles de section circulaire, lesdites dimensions déterminées sont les diamètres.

11. Dispositif selon l'une quelconque des revendications 9 ou 10 ; caractérisé en ce que lesdites dimensions sont en relation biunivoque avec des segments ($P_i$) de ladite figure de balayage dans un plan déterminé perpendiculaire à l'axe de visée

12. Dispositif selon la revendication 11 ; caractérisé en ce que lesdits moyens d'extraction (9) sont associés à des moyens de détermination de la forme de chacun desdits obstacles (5) détectés.

13. Dispositif selon la revendication 12 ; caractérisé en ce qu'il comprend des moyens d'affichage de ladite forme (D).

**Patentansprüche**

1. Telemetrievorrichtung, mit Mitteln (1) zum Senden eines Lichtenergiebündels (10) längs einer Beobachtungsachse ($\Delta$) für die Messung von Abständen, die diese Sendemittel von einem Ziel (T, 5) trennen, das wenigstens einen Teil der empfangenen Energie als Echo an die Sendemittel zurückschickt, Mitteln (6-8) zum Empfangen der so zurückgeschickten Energie und Mitteln (9) für die Bestimmung der Abstände; mit einem Diasporameter (4), das mit zwei Prismen (40-41) versehen ist, die zu Drehgeschwindigkeiten in entgegengesetzten Richtungen um die Achse ($\Delta$) angetrieben werden und dem Bündel (10) eine zeitlich veränderliche Ablenkung in der Weise verleihen, das es in einer zur Achse ($\Delta$) senkrechten Ebene eine bestimmte Abtastfigur beschreibt, wobei das ausgesendete Bündel das Ziel (T, 5) gemäß der Konfiguration der Abtastfigur abtastet, dadurch gekennzeichnet, daß sie Mittel für die Bestimmung der Abmessungen und der Form des erfaßten Ziels (5), eine Kamera für die Bestimmung eines Bildes der vom Lichtenergiebündel abgetasteten Umgebung sowie Mittel zum Anzeigen des von der Kamera gelieferten Bildes der Umgebung enthält, um in diesem Bild die erfaßten Ziele, die eine vorgegebene Form besitzen, anzuzeigen.

2. Vorrichtung nach Anspruch 1, dadurch gekennzeichnet, daß das erste der Prismen (40) zu einer ersten Drehgeschwindigkeit angetrieben wird und das zweite Prisma (41) zu einer zweiten Drehgeschwindigkeit angetrieben wird, die ein ganzzahliges Vielfaches der ersten ist, und daß die Abtastfigur epizykloidisch ist.

3. Vorrichtung nach irgendeinem der Ansprüche 1 bis 2, dadurch gekennzeichnet, daß das Diasporameter den Sendemitteln (1) und den Empfangsmitteln (6-8) gemeinsam ist und daß sie Mittel (2, 3) zum Trennen der gesendeten Energie von der empfangenen Energie enthält.

4. Vorrichtung nach Anspruch 3, dadurch gekennzeichnet, daß die Empfangsmittel eine Photodiode (8) enthalten, die die Lichtenergie in ein elektrisches Signal umsetzen; und daß die Trennmittel ein Viertelwellenlängenplättchen (3) und einen Würfel (2) zum Trennen der Polarisation, die einerseits zwischen den Sendemitteln (1) und dem Diasporameter (4) und andererseits zwischen dem Diasporameter (4) und den Empfangsmitteln (6, 8) angeordnet sind.

5. Vorrichtung nach Anspruch 1, dadurch gekennzeichnet, daß die Laserquelle (1) ein Spektrum von Wellenlängen aussendet, das auf die Wellenlänge von 0,9 mm zentriert ist.

6. Vorrichtung nach irgendeinem der Ansprüche 3 bis 4, dadurch gekennzeichnet, daß die Abstandsbestimmungsmittel (9) für die Bestimmung der Abstände das erste empfangene Echo auswählen, das der Sendung jedes der Impulse entspricht.

7. Telemetrievorrichtung nach irgendeinem der Ansprüche 1 bis 6, dadurch gekennzeichnet, daß sie außerdem Mittel (9) für die Entnahme der Echos enthält, die Hindernissen (5) eines bestimmten Typs entsprechen.

8. Vorrichtung nach Anspruch 7, dadurch gekennzeichnet, daß die Entnahmemittel (9) bei der Abtastung plötzliche Abstandsveränderungen erfassen, die größer als ein bestimmter Schwellenwert sind.

9. Vorrichtung nach Anspruch 7, dadurch gekennzeichnet, daß die Entnahmemittel (9) dann, wenn jedes zu erfassende Hindernis vom drahtförmigen Typ ist, außerdem die Abmessungen des Hindernisses (5) wenigstens längs einer Meßachse bestimmen und die Echos entnehmen, die diesen Abmessungen entsprechen, welche kleiner als ein bestimmter Schwellenwert sind.

**10.** Vorrichtung nach Anspruch 9, dadurch gekennzeichnet, daß die bestimmten Abmessungen dann, wenn die drahtförmigen Gegenstände (5) Kabel mit kreisförmigem Querschnitt sind, die Durchmesser sind.

**11.** Vorrichtung nach irgendeinem der Ansprüche 9 oder 10, dadurch gekennzeichnet, daß die Abmessungen in einer zur Beobachtungsachse (Δ) senkrechten, bestimmten Ebene zu den Segmenten (Pi) der Abtastfigur in einer eineindeutigen Beziehung stehen.

**12.** Vorrichtung nach Anspruch 11, dadurch gekennzeichnet, daß den Entnahmemitteln (9) Mittel für die Bestimmung der Form jedes der erfaßten Hindernisse (5) zugeordnet sind.

**13.** Vorrichtung nach Anspruch 12, dadurch gekennzeichnet, daß sie Mittel für die Anzeige der Form (D) enthält.

**Claims**

**1.** Telemetry device comprising means (1) for the sending of a pencil (10) of light energy along an axis of sight (Δ) for the measurement of distances between these sending means and a target (T,5) returning, as an echo, at least a part of the received energy towards the sending means, means (6-8) for the reception of the energy thus returned and means (9) to determine the said distances; comprising a diasporometer (4) provided with two prisms (40-41) that are moved at rotational speeds in opposite directions about the said axis (Δ) and that impart a time-variable deflection to the pencil (10) so that it describes a determined scanning pattern in a plane that is perpendicular to the said axis (Δ), the pencil sent out scanning the target (T,5) according to the configuration of the scanning pattern, characterized in that it comprises means for determining the dimensions and shape of the target (5) detected, a camera for determining an image of the environment scanned by the pencil of light energy, and means for viewing the image of the environment delivered by the camera so as to highlight within this image the targets detected which have a predetermined shape.

**2.** Device according to Claim 1, characterized in that the first of the said prisms (40) is moved at a first rotational speed and the second prism (41) is moved at a second rotational speed that is a whole multiple of the first speed, and in that the said scanning pattern is epicycloidal.

**3.** Device according to either one of Claims 1 and 2, characterized in that the diasporometer is common to the said sending (1) and receiving (6-8) means, and in that it comprises means (2,3) for separating the energy sent out and the energy received.

**4.** Device according to Claim 3, characterized in that the reception means include a photodiode (8) converting the light energy into an electrical signal; and in that the separation means include a quarter-wave plate (3) and a polarization separator cube (2) positioned between, firstly, the sending means (1) and the diasporometer (4) and, secondly, between the diasporometer (4) and the reception means (6-8).

**5.** Device according to Claim 1, characterized in that the laser source (1) emits a spectrum of wavelengths centred on the 0.9 mm wavelength.

**6.** Device according to either one of Claims 3 and 4, characterized in that the distance determining means (9) select, for the determining of the distances, the first echo received corresponding to the sending of each of the said pulses.

**7.** Telemetry device according to any of Claims 1 to 6, characterized in that it further comprises means (9) for the extraction of the echoes corresponding to obstacles (5) of a determined type.

**8.** Device according to Claim 7, characterized in that said extraction means (9) detect sudden variations of distances greater than a determined threshold during the said scanning.

**9.** Device according to Claim 7, characterized in that, each obstacle to be detected being of the wire-shaped type, the said extraction means (9) further determine the dimensions of the obstacle (5) along at least one measurement axis and extract the echoes corresponding to the said dimensions below a determined threshold.

**10.** Device according to Claim 9, characterized in that, the wire-shaped objects (5) being circular-sectioned cables, the said determined dimensions are the diameters.

**11.** Device according to either one of Claims 9 and 10, characterized in that the said dimensions are in a one-to-one relationship with segments ($P_i$) of the said scanning pattern in a determined plane perpendicular to the axis of sight (Δ).

**12.** Device according to Claim 11, characterized in that the said extraction means (9) are associated with means to determine the shape of each of the said obstacles (5) detected.

**13.** Device according to Claim 12, characterized in that it comprises means for the display of the said shape (D).

FIG.1

FIG.2

$$\Delta\theta = \frac{2\pi}{p+1}$$

$$\Delta t = \frac{2\pi}{\omega(p+1)}$$

FIG.3

FIG.4

FIG.5

FIG.6

FIG.7

FIG.8

FIG.9

14

FIG.10